# EUROPEAN PATENT SPECIFICATION

(11) **EP 4 270 630 B1**
(45) Date of publication and mention of the grant of the patent: **30.09.2026**
(21) Application number: 22864896.0
(22) Date of filing: 08.08.2022
(51) Int. Cl.: H01M 50/59, H01M 50/586, H01M 50/538, H01M 50/152, H01M 50/593, H01M 50/107, H01M 50/179, H01M 50/167, H01M 50/184, H01M 10/0587

(54) **CYLINDRICAL BATTERY CELL, AND BATTERY PACK AND VEHICLE INCLUDING THE SAME**
ZYLINDRISCHE BATTERIEZELLE UND BATTERIEPACK UND FAHRZEUG DAMIT
ÉLÉMENT DE BATTERIE CYLINDRIQUE, ET BLOC-BATTERIE ET VÉHICULE LE COMPRENANT

(30) Priority: 30.08.2021 KR 20210115064
(43) Date of publication of application: 01.11.2023
(73) Proprietor: LG Energy Solution, Ltd., Seoul 07335 (KR)
(72) Inventor: JO, Min-Ki, Daejeon 34122 (KR); KANG, Bo-Hyun, Daejeon 34122 (KR); KIM, Do-Gyun, Daejeon 34122 (KR); MIN, Geon-Woo, Daejeon 34122 (KR); CHOI, Su-Ji, Daejeon 34122 (KR); HWANGBO, Kwang-Su, Daejeon 34122 (KR)
(74) Representative: Goddar, Heinz J.
(86) International application number: PCT/KR2022/011795
(87) International publication number: WO 2023/033391

(56) References cited:
- EP-A1- 3 863 096
- EP-A1- 4 376 138
- CN-A- 113 097 612
- JP-A- 2005 166 664
- JP-A- 2016 115 422
- JP-B2- 5 080 244
- KR-A- 20080 071 313
- KR-A- 20200 037 599
- US-A1- 2005 118 499
- US-A1- 2009 011 329
- US-A1- 2010 151 317

## Description

### TECHNICAL FIELD

The present disclosure relates to a cylindrical battery cell, a battery pack including the cylindrical battery cell, and a vehicle including the battery pack.

The present application claims priority to Korean Patent Application No. 10-2021-0115064 filed on August 30, 2021 in the Republic of Korea.

### BACKGROUND ART

US 2010/151317 A1 relate to a rechargeable battery.

EP 3 863 096 A1 relates to a secondary battery.

US 2005/118499 A1 relates to a secondary battery, and more particularly, to a secondary battery with a structure for preventing a short circuit between a collecting member and a container.

EP 4 376 138 A1 relates to a cylindrical battery, and a battery pack and a vehicle including the cylindrical battery.

Secondary batteries that have ease of application according to product groups and have electrical characteristics such as high energy density are universally applied not only to portable devices, but also to electric vehicles (EVs) or hybrid electric vehicles (HEVs) driven by an electric drive source. These secondary batteries are attracting attention as a new energy source for improving eco-friendliness and energy efficiency because they not only have the primary advantage of dramatically reducing the use of fossil fuels, but also do not generate any by-products from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell, that is, a unit battery cell, has an operating voltage of about 2.5 V to 4.5 V. Therefore, when a higher output voltage is required, a battery pack may be configured by connecting a plurality of battery cells in series. In addition, a plurality of battery cells may be connected in parallel to form a battery pack according to the charge/discharge capacity required for the battery pack. Accordingly, the number of battery cells included in the battery pack may be variously set according to a required output voltage and/or charge/discharge capacity.

On the other hand, as a type of unit secondary battery cell, there are known cylindrical, prismatic, and pouch-type battery cells. In the case of a cylindrical battery cell, a separator, which is an insulator, is interposed between a positive electrode and a negative electrode, and this is wound to form a jelly-roll type electrode assembly, which is then inserted into a battery can to configure a battery. In addition, a lead tab may be connected to a non-coated portion of each of the positive electrode and the negative electrode, and the lead tab is connected to a component functioning as an electrode terminal to electrically connect the electrode assembly and the electrode terminal. However, according to the conventional cylindrical battery cell having such a structure, since the current is concentrated in the narrow lead tab coupled to the positive electrode non-coated portion and/or the negative electrode non-coated portion, the resistance is large, heat is generated greatly, and the current collection efficiency is not good.

In order to solve this problem, the non-coated portion of the positive electrode and the non-coated portion of the negative electrode are designed to be positioned at a top end and a bottom end of the j elly-roll type electrode assembly, respectively, and a current collecting plate is coupled to the non-coated portion, thereby proposing a cylindrical battery cell having a structure with improved current collection efficiency.

However, according to such a cylindrical battery cell structure, since the non-coated portion of the positive electrode and the non-coated portion of the negative electrode protrude outside the jelly-roll, there is a possibility that the non-coated portion of the positive electrode and the battery can contact each other. If the non-coated portion of the positive electrode and the battery can make electrical contact, a short circuit may occur. If a short circuit occurs inside the battery, the battery may be heated or exploded. Therefore, it is necessary to provide an insulating member for preventing electric contact between the non-coated portion of the positive electrode protruding upward and the battery can.

Therefore, a search for a method capable of providing a cylindrical battery cell having a low internal resistance of the battery cell and a low risk of short circuit at the same time, and a battery pack and a vehicle including the cylindrical battery cell is required.

### DISCLOSURE

### Technical Problem

The present disclosure is designed to solve the problems of the related art, and therefore the present disclosure is directed to reducing an internal resistance of a cylindrical battery cell and simultaneously preventing an internal short-circuit of the battery cell.

Also, the present disclosure is directed to minimizing the space occupied by a component applied to prevent contact between an electrode tab and a battery can of a jelly-roll to improve an energy density of the battery cell and allow the j elly-roll to be smoothly inserted into the battery can.

Moreover, the present disclosure is directed to increasing a ratio of a total height of the jelly-roll to a total height of the battery can to improve an energy density of the cylindrical battery cell.

However, the technical object to be solved by the present disclosure is not limited to the above, and other objects not mentioned herein will be clearly understood by those skilled in the art from the following disclosure.

### Technical Solution

The invention is defined in the appended claims.

In one aspect of the present disclosure, there is provided a cylindrical battery cell, comprising: a jelly-roll having a first electrode tab protruding upward and a second electrode tab protruding downward; a battery can configured to accommodate the jelly-roll through a top opening and electrically connected to the second electrode tab; a first current collecting plate coupled to the first electrode tab at an upper portion of the jelly-roll; an insulating shrink tube having a first cover portion for covering at least a part of the first current collecting plate and a second cover portion for covering a top end of an outer circumference of the jelly-roll; and a top cap electrically connected to the first current collecting plate and configured to cover the opening.

Here, a diameter of the first current collecting plate may correspond to a diameter of the j elly-roll.

Also, a diameter of the first current collecting plate may be smaller than a diameter of the jelly-roll, and the first cover portion may cover both the first electrode tab and the first current collecting plate.

Meanwhile, the jelly-roll may include a first region in which the first electrode tab has a first length, and a second region in which the first electrode tab has a second length, the second region being located at an outer perimeter of the first region.

The first length may be formed to be longer than the second length.

A distance from an inner circumference of the battery can to a boundary between the first region and the second region may be equal to or longer than the pressed-in depth of a beading portion formed by pressing in the outer circumference of the battery can.

A beading portion is located below lowermost end of the first current collecting plate

Here, the first current collecting plate may cover the first region of the jelly-roll.

At this time, the first cover portion may cover the second region of the jelly-roll and the first current collecting plate.

Meanwhile, the first cover portion may be connected to the second cover portion, and a radial extension length of the first cover portion may be formed to be greater than or equal to a pressed-in depth of a beading portion formed by pressing in the outer circumference of the battery can.

Meanwhile, the insulating shrink tube includes a thermally shrinkable material that shrinks when heat is applied.

Meanwhile, the cylindrical battery cell may further comprise an electrolyte accommodated in the battery can, and the insulating shrink tube may be a material that does not chemically react with the electrolyte.

Meanwhile, an extension length of the second cover portion may be greater than or equal to an extension length of the first electrode tab.

Meanwhile, the present disclosure provides a battery pack, comprising at least one battery cell according to the previous embodiment.

Moreover, the present disclosure provides a vehicle, comprising at least one battery pack according to the previous embodiment.

### Advantageous Effects

According to the present disclosure, the internal resistance of the battery cell may be reduced and simultaneously the internal short-circuit of the battery cell may be prevented.

In particular, according to the present disclosure, by forming an electrode tab on each of the upper and lower portions of the electrode assembly to increase the area of the electrode tab, the internal resistance of the battery cell may be reduced.

In addition, according to the present disclosure, a short circuit inside the cylindrical battery cell may be prevented by preventing electrical contact between the electrode tab and the battery can through a relatively simple structure.

In addition, according to the present disclosure, it is possible to minimize the space occupied by a component applied to prevent contact between the electrode tab of the jelly-roll and the battery can. Therefore, according to the present disclosure, the energy density of the battery cell may be improved, and the process of inserting the jelly-roll into the battery can may be smoothly performed.

Moreover, according to the present disclosure, the ratio of the total height of the jelly-roll to the total height of the battery can may be increased, thereby increasing the energy density of the cylindrical battery cell.

Therefore, according to the present disclosure, it is possible to provide a cylindrical battery cell having a structure in which an internal resistance is reduced, an internal short-circuit is prevented, the process efficiency is improved, and the energy density is improved, and a battery pack and a vehicle including the cylindrical battery cell.

In addition, the present disclosure may have various other effects, which will be described in each embodiment, or a corresponding description will be omitted for effects that can be easily inferred by a person skilled in the art.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining a cylindrical battery cell according to an embodiment of the present disclosure.
FIG. 2 is a longitudinally-sectioned perspective view of the cylindrical battery cell of FIG. 1.
FIG. 3 is a longitudinally-sectioned view of the cylindrical battery cell of FIG. 1.
FIG. 4 is a perspective view showing the inside of the cylindrical battery cell of FIG. 1.
FIG. 5 is a diagram for explaining a current collecting plate according to another embodiment of the present disclosure.
FIG. 6 is a diagram showing a cylindrical battery cell according to another embodiment of the present disclosure.
FIGS. 7 to FIG. 9 are diagrams showing cylindrical battery cells according to other embodiments of the present disclosure.
FIG. 10 is a diagram showing a battery pack according to an embodiment of the present disclosure.
FIG. 11 is a diagram showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In addition, in order to help understanding of the present disclosure, the accompanying drawings are not drawn to scale, but dimensions of some components may be exaggerated.

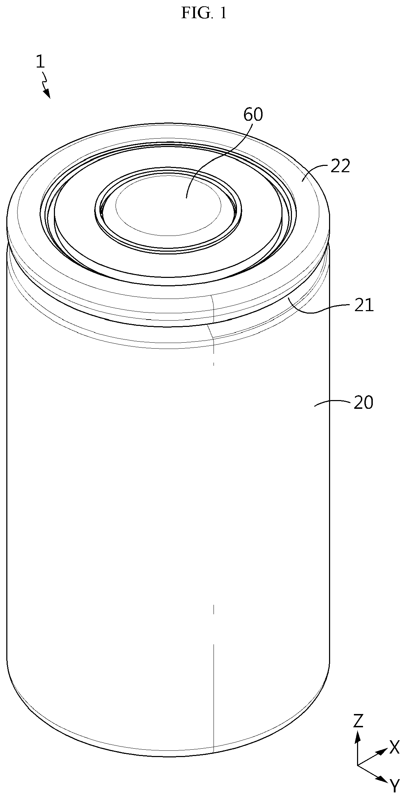

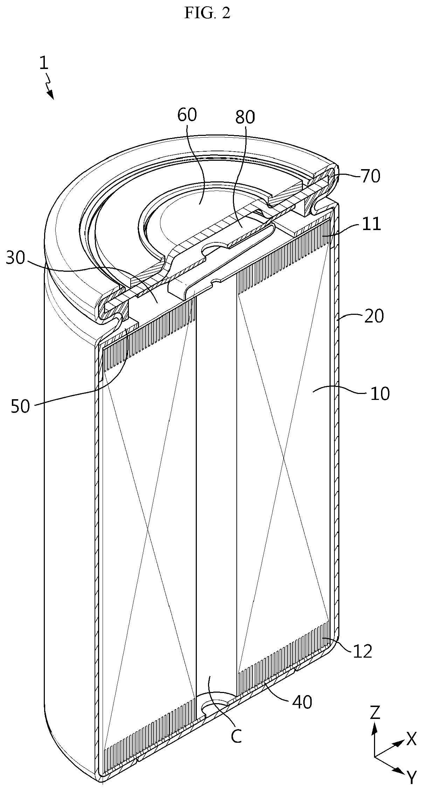

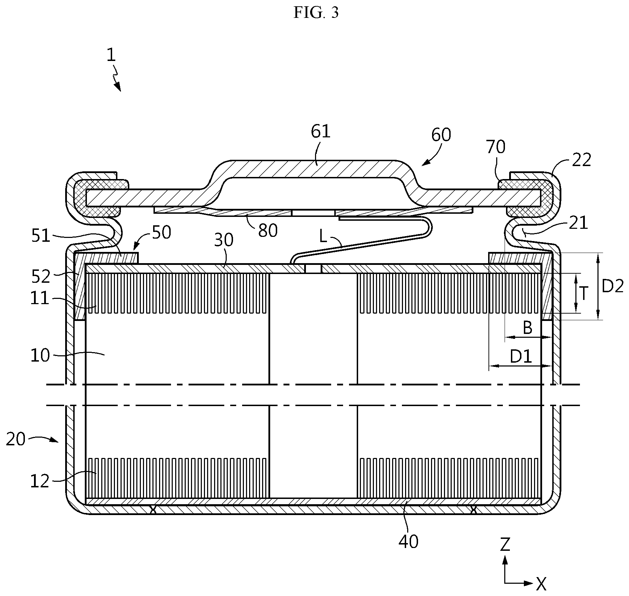

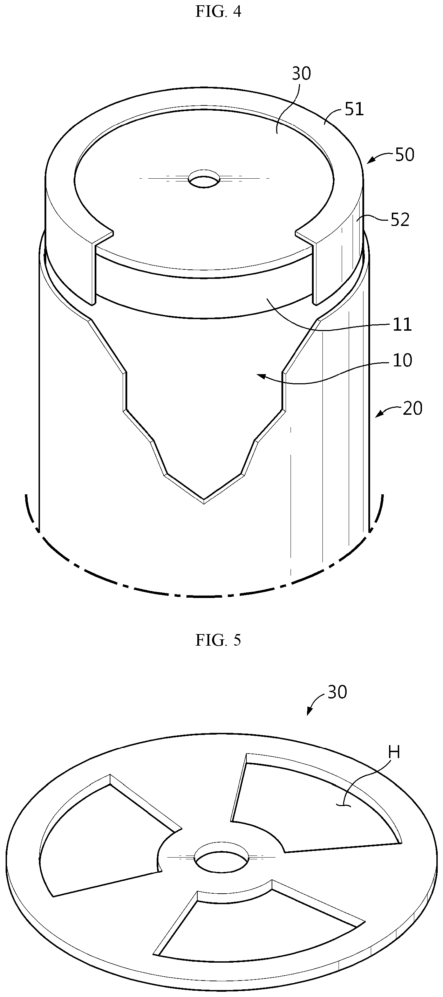

FIG. 1 is a diagram for explaining a cylindrical battery cell according to an embodiment of the present disclosure, and FIG. 2 is a longitudinally-sectioned perspective view of the cylindrical battery cell of FIG. 1. FIG. 3 is a longitudinally-sectioned view of the cylindrical battery cell of FIG. 1, and FIG. 4 is a perspective view showing the inside of the cylindrical battery cell of FIG. 1.

Referring to FIGS. 1 to 4, a cylindrical battery cell 1 according to an embodiment of the present disclosure includes a jelly-roll 10, a battery can 20, a first current collecting plate 30, an insulating shrink tube 50 and a top cap 60. The cylindrical battery cell 1 according to an embodiment of the present disclosure may further include a second current collecting plate 40 and/or a sealing gasket 70 and/or a connection plate 80 in addition to the above components.

The jelly-roll 10 is obtained by winding an electrode assembly of a secondary battery. The jelly-roll 10 includes a first electrode having a first polarity, a second electrode having a second polarity, and a separator interposed between the first electrode and the second electrode. That is, the jelly-roll 10 may be manufactured by winding a stack, which is formed by sequentially stacking the first electrode, the separator and the second electrode at least once, with reference to a winding center C. In this case, a separator may be further provided on the outer circumference of the j elly-roll 10 to insulate from the battery can 20. The first electrode is a positive electrode or a negative electrode, and the second electrode is an electrode having a polarity opposite to that of the first electrode.

Referring to FIGS. 2 and 3, the jelly-roll 10 includes a first electrode tab 11 protruding upward and a second electrode tab 12 protruding downward.

The first electrode includes a first electrode current collector and a first electrode active material coated on one surface or both surfaces of the first electrode current collector. At one end of the first electrode current collector in a width direction (parallel to the Z-axis), there is a non-coated portion on which the first electrode active material is not coated. The non-coated portion functions as the first electrode tab 11. The first electrode tab 11 is provided above the jelly-roll 10 accommodated in the battery can 20 in a vertical direction (parallel to the Z-axis).

The second electrode includes a second electrode current collector and a second electrode active material coated on one surface or both surfaces of the second electrode current collector. At the other end of the second electrode current collector in the width direction (parallel to the Z-axis), there is a non-coated portion on which the second electrode active material is not coated. The non-coated portion functions as the second electrode tab 12. The second electrode tab 12 is provided under the jelly-roll 10 accommodated in the battery can 20 in the vertical direction (parallel to the Z-axis).

Referring to FIGS. 1 to 4, the battery can 20 is a cylindrical container having an opening formed at a top side, and is made of a metal material having conductivity. The battery can 20 accommodates the jelly-roll 10 through the top opening, and accommodates an electrolyte together.

The battery can 20 is electrically connected to the second electrode tab 12 of the jelly-roll 10. Therefore, the battery can 20 has the same polarity as the second electrode tab 12.

The battery can 20 may include a beading portion 21 formed on a top end thereof. In addition, the battery can 20 may include a crimping portion 22. The beading portion 21 is formed by pressing in the outer circumference of the battery can 20. The beading portion 21 prevents the jelly-roll 10 having a size corresponding to the width of the battery can 20 from coming out through the top opening of the battery can 20, and may function as a support portion on which the top cap 60 is seated.

The crimping portion 22 is formed above the beading portion 21. The crimping portion 22 has a shape that is extended and bent to cover the outer circumference of the top cap 60 disposed on the beading portion 21 and a part of the top surface of the top cap 60.

However, the battery can 20 of the present disclosure may not include the beading portion 21 and/or the crimping portion 22. In this case, in order to fix the jelly-roll 10 and/or to fix the top cap 60 and/or to seal the battery can 20, a component that may serve as a stopper for, for example, the jelly-roll 10 may be additionally applied, and/or a structure on which the top cap 60 may be seated may be additionally applied, and/or welding may be performed between the battery can 20 and the top cap 60.

Referring to FIGS. 3 and 4, the cylindrical battery cell 1 according to an embodiment of the present disclosure includes a first current collecting plate 30. In addition, the cylindrical battery cell 1 may further include a second current collecting plate 40. The first current collecting plate 30 and the second current collecting plate 40 are made of a metal material having conductivity.

The first current collecting plate 30 is coupled to the first electrode tab 11 at an upper portion of the jelly-roll 10. A lead L made of a conductive metal may be connected to the first current collecting plate 30. The lead L may extend above the jelly-roll 10 and be directly coupled to the top cap 60, or may be coupled to the connection plate 80 that is coupled to a bottom surface of the top cap 60.

Referring to FIG. 4, the first current collecting plate 30 may have, for example, a substantially circular plate shape. Since the first current collecting plate 30 has a circular plate shape as above, the first current collecting plate 30 may have a shape corresponding to the top surface of the first electrode tab 11 coupled to a lower portion thereof. Referring to FIG. 3, a diameter of the first current collecting plate 30 may correspond to a diameter of the jelly-roll 10. That is, the first current collecting plate 30 may have a shape corresponding to the entire region of the top surface (parallel to the X-Y plane) of the jelly-roll 10 coupled to a lower portion thereof. According to this structure, since the contact area between the first electrode tab 11 and the first current collecting plate 30 is maximized, the internal resistance of the battery may be lowered.

Alternatively, as shown in FIG. 5, the first current collecting plate 30 may have a substantially circular plate shape with at least one hole H penetrating in the vertical direction (parallel to the Z-axis). At this time, the shape of the hole H is not limited. Due to the at least one hole H, the electrolyte may be easily injected into the jelly-roll 10.

Alternatively, although not shown in the drawings, the first current collecting plate 30 may include a plurality of sub-plates extending radially from the center. In this case, the electrolyte may be smoothly injected between the plurality of sub-plates.

Referring to FIG. 3, the first current collecting plate 30 may be coupled to an end of the first electrode tab 11. Alternatively, unlike the drawing, the end of the first electrode tab 11 may be bent in a direction parallel to the first current collecting plate 30 (parallel to the X-Y plane), and in this case, the first current collecting plate 30 may be coupled with the facing first electrode tab 11 which is bent. In this case, the energy density may be increased by minimizing the length occupied by the electrode tab 11 along the height direction (parallel to the Z-axis) within the battery can 20. In addition, by increasing the coupling area between the first current collecting plate 30 and the first electrode tab 11, it is possible to improve the coupling force and lower the resistance at the contact portion.

The coupling between the first electrode tab 11 and the first current collecting plate 30 may be achieved by, for example, laser welding. The laser welding may be performed by partially melting a base material of the first current collecting plate 30, or may be performed with a solder for welding being interposed between the first current collecting plate 30 and the first electrode tab 11. In this case, the solder may have a lower melting point compared to the first current collecting plate 30 and the first electrode tab 11.

Referring to FIGS. 2 and 3, the second current collecting plate 40 may be coupled to the bottom surface of the jelly-roll 10. In this case, one side of the second current collecting plate 40 may be coupled to the second electrode tab 12 of the jelly-roll 10 by welding, and the other side may be coupled onto the inner bottom surface of the battery can 20 by welding. The coupling structure of the second current collecting plate 40 and the second electrode tab 12 coupled to the bottom surface of the j elly-roll 10 is substantially the same as the first current collecting plate 30 coupled to the top surface of the jelly-roll 10 as described above.

Referring to FIGS. 3 and 4, the cylindrical battery cell 1 according to an embodiment of the present disclosure includes an insulating shrink tube 50. The insulating shrink tube 50 may include a shrinkable material. Therefore, when the insulating shrink tube 50 is contracted after wrapping the jelly-roll 10 and the first current collecting plate 30 with the insulating shrink tube 50, the insulating shrink tube 50 may be closely fixed to the jelly-roll 10 and the first current collecting plate 30. Accordingly, insulation may be ensured reliably.

The insulating shrink tube 50 includes a thermally shrinkable material that shrinks when heat is applied. For example, the insulating shrink tube 50 may include polyethylene terephthalate (PET) having a thermally shrinkable property. However, the material of the insulating shrink tube 50 is not limited thereto, and any material that can thermally shrink without losing insulation may be employed for the insulating shrink tube 50 of the present disclosure.

Meanwhile, the insulating shrink tube 50 may thermally shrink within a predetermined temperature range. For example, the predetermined temperature range may be a temperature range including the range of temperature generally formed by heat generated inside the secondary battery during charging and discharging of the secondary battery.

Meanwhile, the insulating shrink tube 50 may be a material that does not chemically react with the electrolyte accommodated in the battery can 20. For example, the insulating shrink tube 50 may include polyethylene terephthalate (PET) that does not chemically react with the electrolyte. However, the material of the insulating shrink tube 50 is not limited thereto, and any material that does not chemically react with the electrolyte may be employed for the insulating shrink tube 50 of the present disclosure.

Referring to FIG. 3, the insulating shrink tube 50 includes a first cover portion 51 and a second cover portion 52. More specifically, the insulating shrink tube 50 may include a first cover portion 51 that covers at least a part of the first current collecting plate 30 and a second cover portion 52 that covers a top end of the outer circumference of the jelly-roll 10.

Referring to FIGS. 3 and 4, the second cover portion 52 refers to a portion extending in the vertical direction (parallel to the Z-axis) from the edge of the first cover portion 51. The first cover portion 51 refers to all parts of the insulating shrink tube 50 other than the second cover portion 52. For example, in FIGS. 3 and 4, the first cover portion 51 refers to a portion of the insulating shrink tube 50 extending in the horizontal direction (parallel to the X-Y plane).

The first cover portion 51 covers at least a part of the first current collecting plate 30. For example, the first cover portion 51 may cover an edge periphery of the top surface of the first current collecting plate 30. Also, the first cover portion 51 may cover a partial region of the first electrode tab 11 that is not covered by the first current collecting plate 30. In addition, the second cover portion 52 covers the top end of the outer circumference of the jelly-roll 10. The first cover portion 51 may be connected to the second cover portion 52.

Referring to FIG. 3, a radial extension length D1 of the first cover portion 51 may be greater than or equal to a pressed-in depth B of the beading portion 21 formed in the battery can 20. Here, the radius direction means a direction of the radius of the jelly-roll 10. Accordingly, electrical contact between the battery can 20 having the second polarity and the first current collecting plate 30 having the first polarity may be reliably prevented. Therefore, the safety of the battery may be secured.

Referring to FIG. 3, an extension length D2 of the second cover portion 52 may be configured to be greater than or equal to an extension length T of the first electrode tab 11. Accordingly, the second cover portion 52 may cover the first electrode tab 11 so that the first electrode tab 11 is not exposed toward a sidewall (an inner circumference) of the battery can 20. According to this structure, electrical contact between the battery can 20 having the second polarity and the first electrode tab 11 having the first polarity may be prevented. Therefore, the extension length D2 of the second cover portion 52 must be at least equal to the extension length T of the first electrode tab 11, and for reliable insulation.

Meanwhile, for secure insulation, the extension length D2 of the second cover portion 52 may be formed even a little longer than the extension length T of the first electrode tab 11. In this case, the second cover portion 52 may cover all of the area corresponding to the non-coated portion (the portion not coated with an electrode active material) and a part of the area corresponding to the coated portion (the portion coated with an electrode active material), along the height direction (parallel to the Z-axis) of the jelly-roll 10.

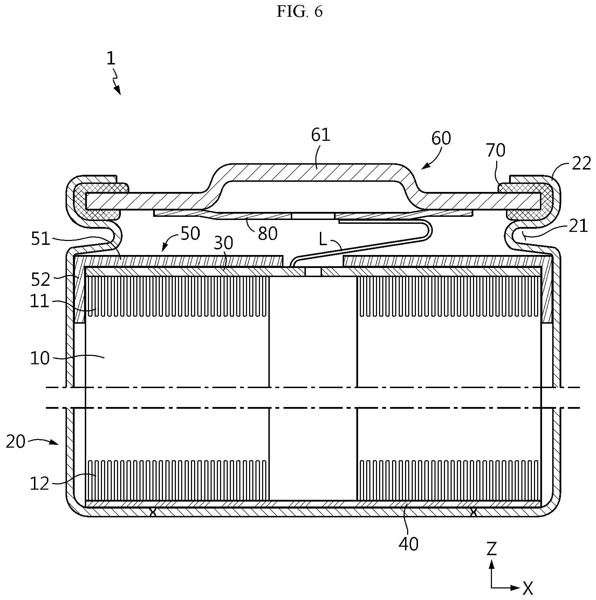

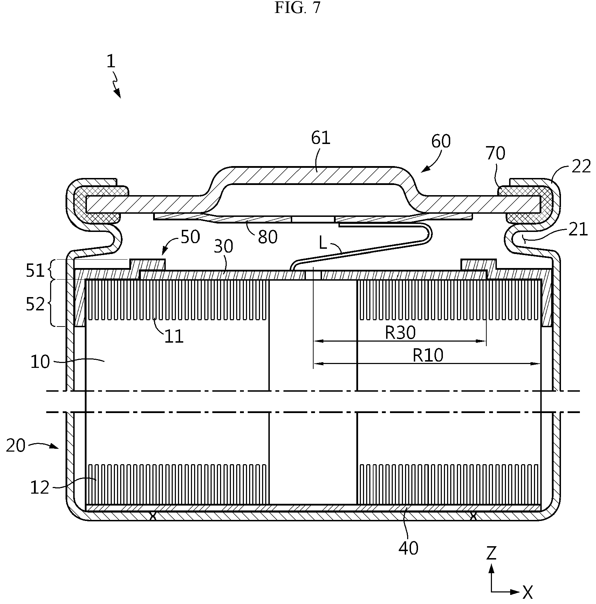

FIG. 6 is a diagram showing a cylindrical battery cell according to another embodiment of the present disclosure, and FIGS. 7 to FIG. 9 are diagrams showing cylindrical battery cells according to other embodiments of the present disclosure.

Since the cylindrical battery cell 1 according to the embodiment of FIGS. 6 to 9 is similar to the cylindrical battery cell 1 of the embodiment of FIGS. 3 and 4, duplicate descriptions will be omitted for components substantially identical or similar to those of the previous embodiment, and hereinafter, the differences from the previous embodiment will be mainly described.

Referring to FIG. 6, the first cover portion 51 of the insulating shrink tube 50 may cover a most region of the top end of the jelly-roll 10. That is, the first cover portion 51 may cover the remaining region of the top surface except for a portion where the first current collecting plate 30 and the lead L are coupled. According to this structure, it is possible to further reduce the risk of a short circuit caused by the contact between the first current collecting plate 30 and the inner surface of the battery can 20. In addition, according to this structure, the coupling area between the insulating shrink tube 50 and the first current collecting plate 30 is increased, and thus it is possible to prevent that the insulating shrink tube 50 is separated from the first current collecting plate 30 to deteriorate the insulating performance of the cylindrical battery cell 1.

Referring to FIG. 7, in the cylindrical battery cell 1 according to an embodiment of the present disclosure, a diameter of the first current collecting plate 30 may be smaller than a diameter of the jelly-roll 10. In other words, a radius R30 of the first current collecting plate 30 may be smaller than a radius R10 of the jelly-roll 10. Even if the diameter of the first current collecting plate 30 is smaller than the diameter of the jelly-roll 10 as above, the electrical connection between the first current collecting plate 30 and the first electrode tab 11 may be maintained. Due to the above structure in which the diameter of the first current collecting plate 30 is smaller than the diameter of the jelly-roll 10, the electrolyte may be smoothly injected through the region of the top surface of the jelly-roll 10 not covered by the first current collecting plate 30. Therefore, the electrolyte may be injected easily, and the electrolyte impregnation may be improved. Also, when the diameter of the first current collecting plate 30 is smaller than the diameter of the jelly-roll 10, the risk of contact between the battery can 20 and the first current collecting plate 30 caused by the indentation of the battery can 20 according to the formation of the beading portion 21 may be resolved. Therefore, in this case, it is possible to increase the total height of the jelly-roll 10 within the battery can 20, thereby improving the energy density. The difference between the radius R10 of the jelly-roll 10 and the radius R30 of the first current collecting plate 30 may be equal to or greater than, for example, the pressed-in depth of the beading portion 21.

Continuingly, referring to FIG. 7, the insulating shrink tube 50 may cover the top end region of the outer circumference of the jelly-roll 10, a partial region of the top surfaces of the first current collecting plate 30, and a region of the top surface of the jelly-roll 10 not covered by the first current collecting plate 30. More specifically, the first cover portion 51 may cover both the first electrode tab 11 and the first current collecting plate 30. That is, the first cover portion 51 may cover the top surface of the first current collecting plate 30 and a region of the top surface of the j elly-roll 10 not covered by the first current collecting plate 30. Accordingly, the first cover portion 51 may have a stepped shape in the region where the first current collecting plate 30 and the first electrode tab 11 contact each other. In other words, the first cover portion 51 may cover both at least a partial region of the top surface of the first current collecting plate 30 including the peripheral region and the outer circumference thereof. Meanwhile, the second cover portion 52 may cover the top end of the outer circumference of the jelly-roll 10.

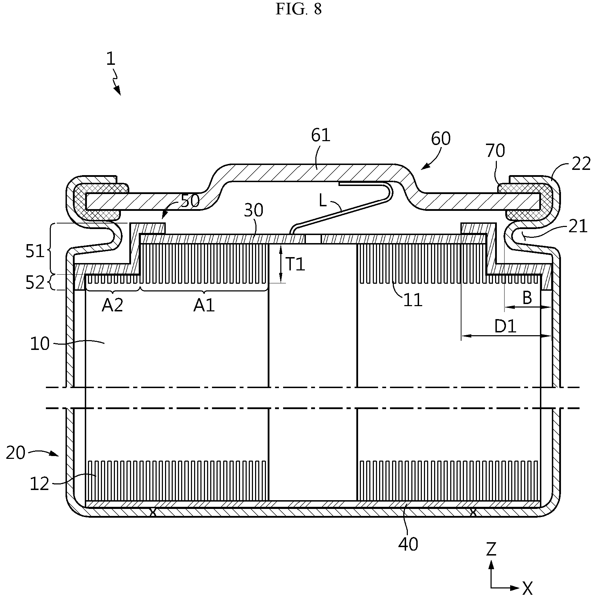

Referring to FIG. 8, in the j elly-roll 10 of the present disclosure, the first electrode tab 11 may include a first region A1 in which the first electrode tab 11 has a first length T1, and a second region A2 in which the first electrode tab 11 has a second length T2, and the second region A2 may be located at an outer perimeter of the first region A1.

Referring to FIG. 8, the first length T1 may be formed to be longer than the second length T2. At least a part of the second region A2 may be located below the beading portion 21 formed in the battery can 20. If the length of the first electrode tab 11 positioned below the beading portion 21 is shorter than the length of the first electrode tab 11 in other regions, the risk of short circuit caused by the contact between the beading portion 21 and the first electrode tab 11 may be reduced. The first current collecting plate 30 may cover the first region A1 of the j elly-roll 10. That is, the diameter of the first current collecting plate 30 may be approximately the same as the radial length of the first region A1. Alternatively, although not shown, the radius of the first current collecting plate 30 may be configured to be smaller than the distance from the winding center C of the j elly-roll 10 to a boundary of the first region A1 and the second region A2.

The first cover portion 51 may cover the second region A2 of the jelly-roll 10 and the first current collecting plate 30. Referring to FIG. 8, the first cover portion 51 may cover the first electrode tab 11 located in the second region A2 of the j elly-roll 10, at least a partial region of the top surface of the first current collecting plate 30 including the peripheral region, and the outer circumference of the first electrode tab 11 located in the first region A1. In addition, the second cover portion 52 may cover the outer circumference of the first electrode tab 11 located in the second region A2.

A distance from the outer circumference of the battery can 20 to the boundary between the first region A1 and the second region A2 may be equal to or longer than the pressed-in depth of the beading portion 21 formed by pressing in the outer circumference of the battery can 20. In this case, the risk of contact between the battery can 20 and the first electrode tab 11 and the risk of contact between the battery can 20 and the first current collecting plate 30 due to the formation of the beading portion 21 are greatly reduced. Therefore, in this case, the total height of the jelly-roll 10 may be increased.

In another aspect, as the total height of the jelly-roll 10 increases, the beading portion 21 may be formed at a lower position than the first current collecting plate 30 or may be formed on the same line as the first current collecting plate 30. More specifically, the beading portion 21 may be located below a lowermost end of the first current collecting plate 30 along the height direction (parallel to the Z-axis) of the cylindrical battery cell 1 or located approximately at the same height as the first current collecting plate 30. According to the above structure in which the beading portion 21 is formed at a lower position than or on the same line as the first current collecting plate 30, the dead space inside the battery can 20 may be significantly reduced. Accordingly, the energy density of the battery may be increased.

In particular, if the beading portion 21 is located below a lowermost end of the first current collecting plate 30 in the height direction of the cylindrical battery cell 1, it is possible to maximize the total height of the jelly-roll 10, thereby minimizing the dead space formed between the top cap 60 and the first current collecting plate 30. Therefore, it is possible to maximize the improvement of the energy density of the battery.

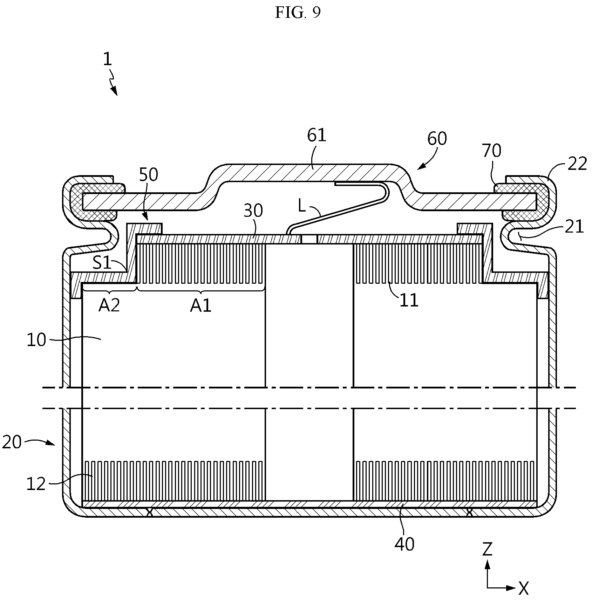

The first electrode tab 11 located in the second region A2 of FIG. 8 may be deleted. This is shown in detail in FIG. 9. Referring to FIG. 9, the jelly-roll 10 does not include the first electrode tab 11 in the second region A2. In this case, compared to the embodiment shown in FIG. 8, the total height of the jelly-roll 10 may be further increased. Accordingly, the dead space inside the battery can 20 may be further reduced compared to FIG. 8. Therefore, the energy density of the battery may be maximized.

Meanwhile, in FIGS. 3, 4, and 6 to 9, the insulating shrink tube 50 is shown to be thick for convenience of explanation, but the thickness of the insulating shrink tube 50 is actually very thin and is close to a film shape that occupies little space. Therefore, the energy density of the cylindrical secondary battery according to the present disclosure may be further increased compared to the case where a separate insulator is applied to prevent contact between the first current collecting plate 30 and the battery can 20 and contact between the first electrode tab 11 and the battery can 20. In addition, in the cylindrical secondary battery according to the present disclosure, due to the small thickness of the insulating shrink tube 50, in a state in which the insulating shrink tube 50 is applied to the coupled body of the jelly-roll 10 and the first current collecting plate 30 to finish the insulation process, the coupled body may be inserted into the battery can 20 smoothly. Therefore, productivity may be improved in manufacturing the cylindrical battery cell 1, and the risk of product defects occurring in the process of inserting the coupled body of the jelly-roll 10 and the first current collecting plate 30 into the battery can 20 is low.

Referring to FIG. 3 again, the cylindrical battery cell 1 according to an embodiment of the present disclosure includes a top cap 60.

The top cap 60 is electrically connected to the first current collecting plate 30 and may cover the opening. The top cap 60 is a component made of a metal material with conductivity, and covers the top opening of the battery can 20. The top cap 60 is electrically connected to the first electrode tab 11 of the jelly-roll 10, and is electrically insulated from the battery can 20. Accordingly, the top cap 60 may function as the first electrode terminal of the cylindrical battery cell 1.

The top cap 60 may be seated on the beading portion 21 formed on the battery can 20. The top cap 60 may be fixed by forming the crimping portion 22. A sealing gasket 70 may be interposed between the top cap 60 and the crimping portion 22 of the battery can 20 to secure the airtightness of the battery can 20 and to make electrical insulation between the battery can 20 and the top cap 60.

The top cap 60 may include a protruding portion 61 protruding upward from the center thereof. That is, the protruding portion 61 may protrude upward to facilitate contact with an electrical connection component such as a bus bar.

Referring to FIGS. 2 and 3, the cylindrical battery cell 1 according to an embodiment of the present disclosure may further include a connection plate 80.

The connection plate 80 may be coupled to the bottom surface of the top cap 60 to be electrically connected to the lead L in contact with the first current collecting plate 30. However, as in FIGS. 8 and 9, the connection plate 80 may be omitted to reduce the space inside the battery and increase the energy density.

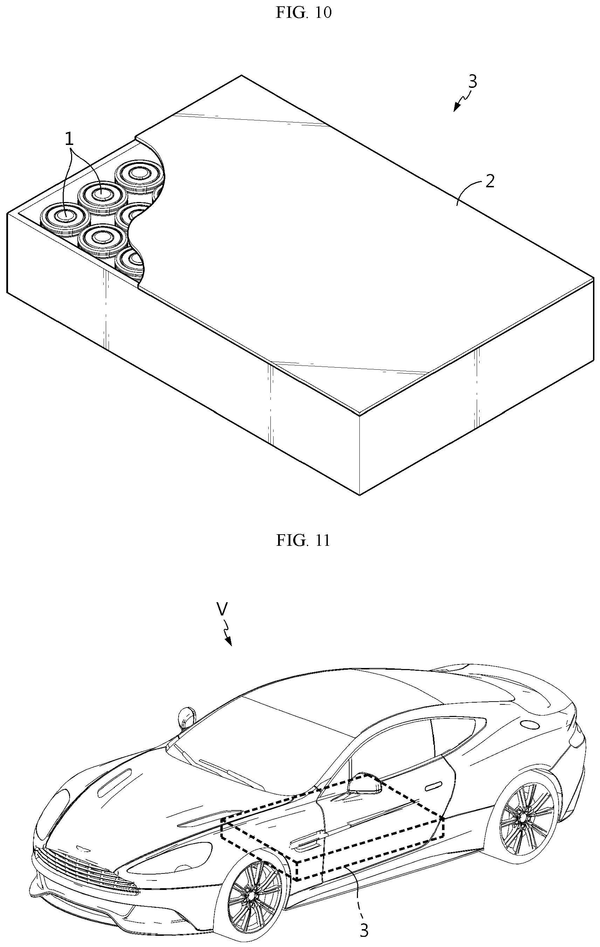

FIG. 10 is a diagram showing a battery pack according to an embodiment of the present disclosure.

Referring to FIG. 10, a battery pack 3 according to an embodiment of the present disclosure includes a secondary battery assembly electrically connected to a plurality of cylindrical battery cells 1 according to an embodiment of the present disclosure as described above, and a pack housing 2 for accommodating the same. In the drawings of the present disclosure, components such as a bus bar and a power terminal for electrical connection are omitted for convenience of illustration.

FIG. 11 is a diagram showing a vehicle according to an embodiment of the present disclosure.

Referring to FIG. 11, a vehicle V according to an embodiment of the present disclosure may be, for example, a hybrid electric vehicle or an electric vehicle V, and includes the battery pack 3 according to an embodiment of the present disclosure. The vehicle V operates by receiving power from the battery pack 3 according to an embodiment of the present disclosure.

On the other hand, although terms indicating directions such as up and down are used in this specification, these terms are only for convenience of explanation, and it is obvious to those skilled in the art of the present disclosure that they may vary depending on the location of a target object or the location of an observer.

### [Explanation of signs]

V: vehicle
3: battery pack
2: pack housing
1: cylindrical battery cell
10: jelly-roll
11: first electrode tab
12: second electrode tab
20: battery can
21: beading portion
22: crimping portion
30: first current collecting plate
40: second current collecting plate
50: insulating shrink tube
51: first cover portion
52: second cover portion
60: top cap
61: protruding portion
70: sealing gasket
80: connection plate
L: lead
C: winding center
B: pressed-in depth
H: hole
D1: radial extension length of the first cover portion
D2: extension length of the second cover portion
R10: radius of the jelly-roll
R30: radius of the first current collecting plate
T: extension length of the first electrode tab
T1: first length
T2: second length
A1: first region
A2: second region

## Claims

1. A cylindrical battery cell (1), comprising:
a jelly-roll (10) having a first electrode tab (11) protruding upward and a second electrode tab (12) protruding downward;
a battery can (20) configured to accommodate the jelly-roll (10) through a top opening and electrically connected to the second electrode tab (12);
a first current collecting plate (30) coupled to the first electrode tab (11) at an upper portion of the jelly-roll (10);
a top cap (60) electrically connected to the first current collecting plate (30) and configured to cover the top opening; **characterized by**
an insulating shrink tube (50) which includes a thermally shrinkable material that shrinks when heat is applied, wherein the insulating shrink tube (50) has a first cover portion (51) for covering at least a part of the first current collecting plate (30) and a second cover portion (52) for covering a top end of an outer circumference of the jelly-roll (10).

2. The cylindrical battery cell (1) according to claim 1,
wherein a diameter of the first current collecting plate (30) corresponds to a diameter of the jelly-roll (10).

3. The cylindrical battery cell (1) according to claim 1,
wherein a diameter of the first current collecting plate (30) is smaller than a diameter of the jelly-roll (10), and
wherein the first cover portion (51) covers both the first electrode tab (11) and the first current collecting plate (30).

4. The cylindrical battery cell (1) according to claim 1,
wherein the jelly-roll (10) includes a first region (A1) in which the first electrode tab (11) has a first length (T1), and a second region (A2) in which the first electrode tab (11) has a second length (T2), the second region (A2) being located at an outer perimeter of the first region (A1).

5. The cylindrical battery cell (1) according to claim 4,
wherein the first length (T1) is formed to be longer than the second length (T2).

6. The cylindrical battery cell (1) according to claim 5,
wherein a distance from an inner circumference of the battery can (20) to a boundary between the first region (A1) and the second region (A2) is equal to or longer than the pressed-in depth (B) of a beading portion formed by pressing in the outer circumference of the battery can (20).

7. The cylindrical battery cell (1) according to claim 6,
wherein the beading portion is located below a lowermost end of the first current collecting plate (30).

8. The cylindrical battery cell (1) according to claim 4,
wherein the first current collecting plate (30) covers the first region (A1) of the jelly-roll (10).

9. The cylindrical battery cell (1) according to claim 8,
wherein the first cover portion (51) covers the second region of the jelly-roll (10) and the first current collecting plate (30).

10. The cylindrical battery cell (1) according to claim 1,
wherein the first cover portion (51) is connected to the second cover portion (52), and
wherein a radial extension length (D1) of the first cover portion (51) is formed to be greater than or equal to a pressed-in depth (B) of a beading portion formed by pressing in an outer circumference of the battery can (20).

11. The cylindrical battery cell (1) according to claim 1,
wherein the cylindrical battery cell (1) further comprises an electrolyte accommodated in the battery can (20), and
wherein the insulating shrink tube (50) is a material that does not chemically react with the electrolyte.

12. The cylindrical battery cell (1) according to claim 1,
wherein an extension length (D2) of the second cover portion (52) is greater than or equal to an extension length (T) of the first electrode tab (11).

13. A battery pack (3), comprising at least one cylindrical battery cell (1) according to any one of claims 1 to 12.

14. A vehicle (V), comprising at least one battery pack (3) according to claim 13.

## Patentansprüche

1. Zylindrische Batteriezelle (1), umfassend:
eine Jelly-Rolle (10) mit einer nach oben ragenden ersten Elektrodenlasche (11) und einer nach unten ragenden zweiten Elektrodenlasche (12);
einem Batteriegehäuse (20), das dazu ausgebildet ist, die Jelly-Rolle (10) durch eine obere Öffnung aufzunehmen, und das elektrisch mit der zweiten Elektrodenlasche (12) verbunden ist;
eine erste Stromsammelplatte (30), die an einem oberen Abschnitt der Jelly-Rolle (10) mit der ersten Elektrodenlasche (11) verbunden ist;
eine obere Kappe (60), die elektrisch mit der ersten Stromsammelplatte (30) verbunden und dazu ausgebildet ist, die obere Öffnung abzudecken;
**gekennzeichnet durch**
einen isolierenden Schrumpfschlauch (50), der ein thermisch schrumpfbares Material umfasst, das bei Wärmeeinwirkung schrumpft, wobei der isolierende Schrumpfschlauch (50) einen ersten Abdeckabschnitt (51) zum Bedecken wenigstens eines Teils der ersten Stromsammelplatte (30) und einen zweiten Abdeckabschnitt (52) zum Abdecken eines oberen Endes eines Außenumfangs der Jelly-Rolle (10) aufweist.

2. Zylindrische Batteriezelle (1) nach Anspruch 1,
wobei ein Durchmesser der ersten Stromsammelplatte (30) einem Durchmesser der Jelly-Rolle (10) entspricht.

3. Zylindrische Batteriezelle (1) nach Anspruch 1,
wobei der Durchmesser der ersten Stromkollektorplatte (30) kleiner ist als der Durchmesser der Jelly-Rolle (10) und
wobei der erste Abdeckabschnitt (51) sowohl die erste Elektrodenlasche (11) als auch die erste Stromsammelplatte (30) abdeckt.

4. Zylindrische Batteriezelle (1) nach Anspruch 1,
wobei die Jelly-Rolle (10) einen ersten Bereich (A1) aufweist, in dem die erste Elektrodenlasche (11) eine erste Länge (T1) aufweist, und einen zweiten Bereich (A2), in dem die erste Elektrodenlasche (11) eine zweite Länge (T2) aufweist, wobei sich der zweite Bereich (A2) an einem Außenumfang des ersten Bereichs (A1) befindet.

5. Zylindrische Batteriezelle (1) nach Anspruch 4,
wobei die erste Länge (T1) länger als die zweite Länge (T2) ausgebildet ist.

6. Zylindrische Batteriezelle (1) nach Anspruch 5,
wobei ein Abstand von einem Innenumfang des Batteriebehälters (20) zu einer Grenze zwischen dem ersten Bereich (A1) und dem zweiten Bereich (A2) gleich oder größer ist als die Einpresstiefe (B) eines durch Einpressen am Außenumfang des Batteriebehälters (20) gebildeten Sickenabschnitts.

7. Zylindrische Batteriezelle (1) nach Anspruch 6,
wobei sich der Sickenabschnitt unterhalb eines untersten Endes der ersten Stromsammelplatte (30) befindet.

8. Zylindrische Batteriezelle (1) nach Anspruch 4,
wobei die erste Stromsammelplatte (30) den ersten Bereich (A1) der Jelly-Rolle (10) bedeckt.

9. Zylindrische Batteriezelle (1) nach Anspruch 8,
wobei der erste Abdeckabschnitt (51) den zweiten Bereich der Jelly-Rolle (10) und die erste Stromsammelplatte (30) abdeckt.

10. Zylindrische Batteriezelle (1) nach Anspruch 1,
wobei der erste Abdeckabschnitt (51) mit dem zweiten Abdeckabschnitt (52) verbunden ist, und
wobei eine radiale Ausdehnungslänge (D1) des ersten Abdeckabschnitts (51) so ausgebildet ist, dass sie größer oder gleich einer Einpresstiefe (B) eines durch Einpressen an einem Außenumfang des Batteriebehälters (20) gebildeten Sickenabschnitts ist.

11. Zylindrische Batteriezelle (1) nach Anspruch 1,
wobei die zylindrische Batteriezelle (1) ferner einen in dem Batteriegehäuse (20) untergebrachten Elektrolyten umfasst, und
wobei der isolierende Schrumpfschlauch (50) ein Material ist, das nicht chemisch mit dem Elektrolyten reagiert.

12. Zylindrische Batteriezelle (1) nach Anspruch 1,
wobei eine Ausdehnungslänge (D2) des zweiten Abdeckabschnitts (52) größer oder gleich einer Ausdehnungslänge (T) der ersten Elektrodenlasche (11) ist.

13. Batteriepack (3), umfassend mindestens eine zylindrische Batteriezelle (1) gemäß einem der Ansprüche 1 bis 12.

14. Fahrzeug (V), das mindestens einen Batteriepack (3) gemäß Anspruch 13 umfasst.

## Revendications

1. Élément de batterie cylindrique (1), comprenant :
un roulé (10) ayant une première languette d'électrode (11) saillant vers le haut et une deuxième languette d'électrode (12) saillant vers le bas ;
un boîtier de batterie (20) configuré pour accueillir le roulé (10) à travers une ouverture supérieure et connecté électriquement à la deuxième languette d'électrode (12) ;
une première plaque collectrice de courant (30) couplée à la première languette d'électrode (11) à une partie supérieure du roulé (10) ;
un capuchon supérieur (60) connecté électriquement à la première plaque collectrice de courant (30) et configuré pour couvrir l'ouverture supérieure ; **caractérisé en ce que**
un tube isolant rétractable (50) qui inclut un matériau thermorétractable qui se rétracte quand une chaleur est appliquée, dans lequel le tube isolant rétractable (50) a une première partie couvercle (51) pour couvrir au moins une partie de la première plaque collectrice de courant (30) et une deuxième partie couvercle (52) pour couvrir une extrémité supérieure d'une circonférence extérieure du roulé (10).

2. Élément de batterie cylindrique (1) selon la revendication 1,
dans lequel un diamètre de la première plaque collectrice de courant (30) correspond à un diamètre du roulé (10).

3. Élément de batterie cylindrique (1) selon la revendication 1,
dans lequel un diamètre de la première plaque collectrice de courant (30) est inférieur à un diamètre du roulé (10), et
dans lequel la première partie couvercle (51) couvre à la fois la première languette d'électrode (11) et la première plaque collectrice de courant (30).

4. Élément de batterie cylindrique (1) selon la revendication 1,
dans lequel le roulé (10) inclut une première région (A1) dans laquelle la première languette d'électrode (11) a une première longueur (T1), et une deuxième région (A2) dans laquelle la première languette d'électrode (11) a une deuxième longueur (T2), la deuxième région (A2) étant située à un périmètre extérieur de la première région (A1).

5. Élément de batterie cylindrique (1) selon la revendication 4,
dans lequel la première longueur (T1) est formée pour être plus longue que la deuxième longueur (T2).

6. Élément de batterie cylindrique (1) selon la revendication 5,
dans lequel une distance depuis une circonférence intérieure du boîtier de batterie (20) à une limite entre la première région (A1) et la deuxième région (A2) est égale ou plus longue que la profondeur d'enfoncement (B) d'une partie bourrelet formée en pressant dans la circonférence extérieure du boîtier de batterie (20).

7. Élément de batterie cylindrique (1) selon la revendication 6,
dans lequel la partie bourrelet est située au-dessous d'une extrémité la plus basse de la première plaque collectrice de courant (30).

8. Élément de batterie cylindrique (1) selon la revendication 4,
dans lequel la première plaque collectrice de courant (30) couvre la première région (A1) du roulé (10).

9. Élément de batterie cylindrique (1) selon la revendication 8,
dans lequel la première partie couvercle (51) couvre la deuxième région du roulé (10) et la première plaque collectrice de courant (30).

10. Élément de batterie cylindrique (1) selon la revendication 1,
dans lequel la première partie couvercle (51) est connectée à la deuxième partie couvercle (52), et
dans lequel une longueur d'extension radiale (D1) de la première partie couvercle (51) est formée pour être supérieure ou égale à une profondeur d'enfoncement (B) d'une partie bourrelet formée en pressant dans une circonférence extérieure du boîtier de batterie (20).

11. Élément de batterie cylindrique (1) selon la revendication 1,
dans lequel l'élément de batterie cylindrique (1) comprend en outre un électrolyte accueilli dans le boîtier de batterie (20), et
dans lequel le tube isolant rétractable (50) est un matériau qui ne réagit pas chimiquement avec l'électrolyte.

12. Élément de batterie cylindrique (1) selon la revendication 1,
dans lequel une longueur d'extension (D2) de la deuxième partie couvercle (52) est supérieure ou égale à une longueur d'extension (T) de la première languette d'électrode (11).

13. Bloc-batterie (3), comprenant au moins un élément de batterie cylindrique (1) selon l'une quelconque des revendications 1 à 12.

14. Véhicule (V), comprenant au moins un bloc-batterie (3) selon la revendication 13.
